# EUROPÄISCHE PATENTSCHRIFT

(11) **EP 0 529 439 B1**
(45) Veröffentlichungstag und Bekanntmachung des Hinweises auf die Patenterteilung: **14.02.1996**
(21) Anmeldenummer: 92113898.8
(22) Anmeldetag: 14.08.1992
(51) Int. Cl.: C09K 19/02, C09K 19/32

(54) **Schaltbare kolumnare flüssigkristalline Systeme**
Switchable columnar liquid crystalline systems
Systèmes à cristaux liquides columnaires commutables

(30) Priorität: 17.08.1991 DE 4127307
(43) Veröffentlichungstag der Anmeldung: 03.03.1993
(73) Patentinhaber: HOECHST AKTIENGESELLSCHAFT, D-65926 Frankfurt am Main (DE)
(72) Erfinder: Bock, Harald, W-1000 Berlin 33 (DE); Helfrich, Wolfgang, Prof.Dr., W-1000 Berlin 46 (DE); Heppke, Gerd, Prof. Dr., W-1000 Berlin 31 (DE)

(56) Entgegenhaltungen:
- EP-A- 0 350 842
- J. PHYS. FRANCE Bd. 45, 1984, Seiten 745 - 754 A. M. LEVELUT ET AL. 'structure des deux phases colonnaires d'un ester de triphénylène chiral'
- PHYS. REV. LETT. Bd. 60, Nr. 2, 30. Mai 1988, Seiten 2303 - 2306 P.PALFFY- MUHORAY ET AL. 'ferroelectric nematic liquid crystals: realizability and molecular constraints'
- MOLECULAR CRYSTALS AND LIQUID CRYSTALS Bd. 146, Mai 1987, L. LEI 'bowlic liquid crystals'

## Beschreibung

Die Strukturen von zwei geneigten kolumnaren Phasen aus chiralen Molekülen wurden von Levelut et al. beschrieben (J. Phys. France 45, 745 (1984)). Die Autoren argumentieren, daß eine der beiden Phasen in einer Richtung quer zu den Säulen (= Kolumnen) ferroelektrisch polarisiert sein sollte. Wegen der Fixierung der Polarisation jeder Säule durch das zweidimensionale Säulengitter hielten sie jedoch eine Veränderung der ferroelektrischen Polarisation durch elektrische Felder für zweifellos unmöglich. Hierin sahen die Autoren einen Unterschied zu den geneigt smektischen Phasen aus chiralen Molekülen, die infolge ihrer ferroelektrischen Polarisation bistabil geschaltet werden können.

Die Möglichkeit, daß chirale Moleküle geneigt kolumnare Phasen bilden, die ferroelektrisch sind, wurde allgemein von Palffy-Muhoray et al. diskutiert (Phys. Rev. Lett. 60, 2303 (1988)). Die Autoren waren der Meinung, daß eine makroskopische ferroelektrische Polarisation quer zu den Säulenachsen eher unwahrscheinlich ist. Die Frage, ob solche Phasen elektrisch schaltbar sind, wurde nicht gestellt.

In EP 405516 wird eine Substanzklasse mit Molekülen beschrieben, die pyramidenförmige kolumnare Phasen ausbilden. Hier ist tatsächlich eine korrelierte Ausrichtung der Dipole längs der Kolumnenachsen und damit eine ferroelektrische Phase realisiert. Die beschriebenen Phasen lassen sich zwar elektrisch schalten, d.h., die Dipole kehren ihre Richtung durch Anlegen äußerer elektrischer Felder um, die Zustände unterscheiden sich aber optisch nicht, so daß eine Displayanwendung entfällt.

Es wurde nun überraschend gefunden, daß es Moleküle gibt die ferroelektrische kolumnare Phasen bilden, mit denen sich elektrooptische Displays bauen lassen.

Die Erfindung betrifft somit:
1. Ein elektrooptisch schaltbares kolumnar-flüssigkristallines System, das dadurch gekennzeichnet ist, daß die Kolumnen eine ferroelektrische Querpolarisation besitzen.
2. Ein elektrooptisches Schalt- und Anzeigeelement, das ein unter 1. charakterisiertes Flüssigkristallsystem enthält.

In den Säulen elektrooptisch schaltbarer ferroelektrischer Phasen sind die Moleküle zur Längsachse der Säulen so geneigt oder in anderer Weise orientiert, daß die Säulen ferroelektrisch polarisiert sind. Die ferroelektrische Polarisation liegt in einer Richtung quer zur Säulenachse oder hat wenigstens eine Querkomponente. Die Polarisationsrichtung muß nicht für alle Säulen einer kolumnaren Phase dieselbe sein. Durch Anlegen eines elektrischen Feldes an den Flüssigkristall wird die Querpolarisation der Säulen ganz oder teilweise reorientiert.

Ferroelektrische kolumnare Phasen können auch aus Molekülmischungen bestehen. Beispielsweise können achirale Moleküle eine geneigte kolumnare Phase bilden, die durch Beimischung chiraler Moleküle (Dotierstoffe) ferroelektrisch wird. Auch polymere Flüssigkristalle können zur Herstellung kolumnarer ferroelektrischer Phasen verwendet werden.

Der Grundzustand des kolumnaren Flüssigkristalls kann auch antiferroelektrisch sein, d.h., die Querpolarisationen der Säulen können sich gegenseitig aufheben, sofern sich auch in diesem Fall durch Anlegen eines elektrischen Feldes die ferroelektrische Querpolarisation aller oder eines Teils der Säulen so reorientieren läßt, daß ein ferroelektrischer Zustand entsteht. Das gilt analog auch für kolumnare Flüssigkristalle, in deren Grundzustand die Querpolarisation der Säulen helikal ist, so daß sie sich über die Länge der einzelnen Säulen wegmittelt.

Das erfindungsgemäße flüssigkristalline System kann beispielsweise für die Herstellung elektrooptischer Schalt- und Anzeigevorrichtungen verwendet werden. Diese können darüber hinaus u.a. folgende Komponenten enthalten: Zwei Elektroden, zwei durchsichtige Trägerplättchen, die mit den Elektroden identisch sein können, mindestens einen Polarisator. Allgemein kann sich der Aufbau der Schaltzelle an denjenigen anlehnen, der bei Verwendung von ferroelektrischen geneigt smektischen Phasen üblich ist. In der Zelle ist jedoch ein kolumnarer Flüssigkristall in geeigneter Weise zu orientieren und zu schalten.

Die Kolumnen in der elektrooptischen Zelle sollen einheitlich orientiert sein. Vorzugsweise bildet die Längsachse der Kolumnen einen Winkel von 45 bis 90° mit der Zellnormalen. Insbesondere bevorzugt sind die Systeme, in denen die Längsachsen parallel zu den leitenden Begrenzungsflächen ausgerichtet sind. Eine solche Orientierung stellt sich in der Schaltzelle beim Wachstum der kolumnaren Phase durch Abkühlen der isotropen Flüssigkeit häufig von selber ein, wobei die Säulen jedoch in verschiedene zur Begrenzungsfläche parallele Richtungen zeigen können.

Die einheitliche Ausrichtung der Säulenlängsachsen in einer Richtung parallel zu den Begrenzungsflächen kann durch Scherung der ungeordneten kolumnaren Phase zwischen Trägerplättchen erreicht werden (T. Itoh et al., Liquid Crystals 9, 221 (1991)). Weitere mögliche Methoden zur Erzielung einer einheitlichen Ausrichtung der Säulenlängsachsen sind u.a. das Wachstum der kolumnaren Phasen durch Abkühlen der isotropen Flüssigkeit im Temperaturgradienten oder in elektrischen und magnetischen Feldern sowie das Wachstum aus anderen flüssigkristallinen Phasen.

Wenn das zweidimensionale Gitter der Säulen nicht hexagonal ist, sind nur zwei ferroelektrische Zustände entgegengesetzter Polarisation zu erwarten, die physikalisch gleichwertige stabile Zustände darstellen. Die stabile Querpolarisation soll parallel zur Zellnormalen liegen oder eine Komponente in deren Richtung haben. Es genügt für die elektrooptische Anwendung, wenn diese Einstellung erst durch Anlegen einer elektrischen Spannung hervorgerufen wird.

Ferroelektrische geneigt kolumnare Phasen mit zwei stabilen Zuständen können, wenn sie elektrisch schaltbar sind, durch Spannungspulse entgegengesetzten Vorzeichens bistabil geschaltet werden. Die gekreuzten optischen Hauptachsen der Schaltzelle drehen sich beim Umpolen von den alten in die neuen Richtungen. Auch die Zwischenzustände haben eine Lebensdauer bei plötzlichem Abschalten der Spannung und sind für stufenloses elektrooptisches Schalten verwendbar.

Für das erfindungsgemäße flüssigkristalline System können alle Moleküle eingesetzt werden, die kolumnare Strukturen ausbilden und schaltbar sind. Dazu geeignete Molekülstrukturen sind oblate oder scheibenförmige Strukturen. Als kolumnare Strukturen ausbildend werden folgende Verbindungsklassen genannt:
- mehrfach lateral substitierte Aromaten (sowie deren Komplexe mit Elektronenakzeptoren wie Trinitrofluorenon), z.B. Oligo-acyloxy-, -alkyloxy-, -alkylmercapto-, -alkyloxycarbonyl-, -alkoxycarbonylalkyl-, -acylamino-, -alkyloxybenzoyloxy-, -alkylbenzoyloxy-, -alkyloxyphenylethinyl-, -alkyl- -Benzole, -Triphenylene, -Bezochinone, -Truxene, -Naphthaline, -5H10H-4,9-Dioxa-5, 10-dioxo-pyrene, -Anthrachinone, -Tetrabenzocyclododecane, -Tetrapyrazinoporphyrazine, -Phthalocyanine, -Porphine, -Phthalocyanin-Metallkomplexe, -Pyrene;
- mehrfach substitierte Mono- und Oligosaccaride, z.B. Pentaacylglucosen, Octaacylcellobiosen, Heptaacylmonoalky-deoxycellobiosen, Octaacylmaltosen, Hexaacylinososen, Tetraacylinososen, Triacylinososen;
- andere Verbindungen ähnlicher Geometrie, z.B. bekettete Bis-1,3-dionato-Kupfer(II)-Komplexe, Arylimin-Palladium-Komplexe, N-benzoylierte Azamakrozyklen, benzoylierte Cyclohexantriole / Catechine, Quercitole und ähnliche Naturstoffe

Bevorzugte optisch aktive Moleküle sind solche, in denen möglichst viele/eine bis alle der lateralen Ketten/Gruppen/Substituenten chiral sind. Dabei sollten nahe am Asymmetriezentrum eine oder mehrere polare Gruppen vorhanden sein und sowohl Asymmetriezentrum als auch polare Gruppe möglichst dicht am scheibenförmigen Molekülkern sitzen. Solche Ketten können unter anderem sein: α-Fluoracyl-, α-Chloracyl-, Alkyl-epoxycarbonyl-, α-(Acylamino-)acyl-, α-(Acyloxy)-acyl- und α-(Alkyloxy-)acyl-Ketten, chirale Alkylsulfinate und Sulfoxide. Zwischen chiraler Kette und Kern kann sich auch eine starre Zwischengruppe wie -OC₆H₄(CO)- befinden. Der Kern kann ein oder mehrere Asymmetriezentren und/oder eine oder mehrere polare Gruppen tragen (z.B. Zucker). In Charge-Transfer-Komplexen kann auch der Akzeptor das chirale Element sein (z.B. O-(Tetranitrofluorenylidenamino-)milchsäureester)

Besonders bevorzugt werden in den erfindungsgemäßen Systemen Substanzen der folgenden Formeln eingesetzt: 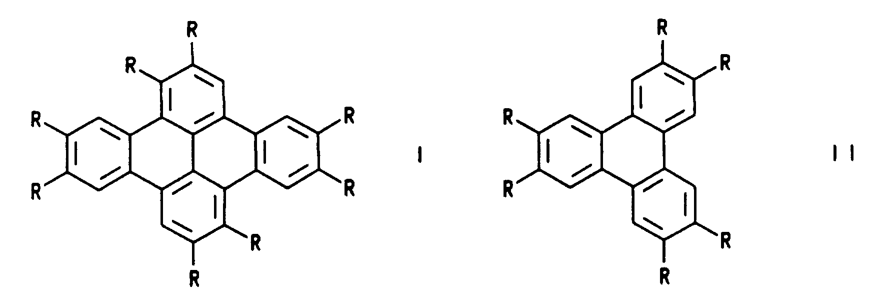 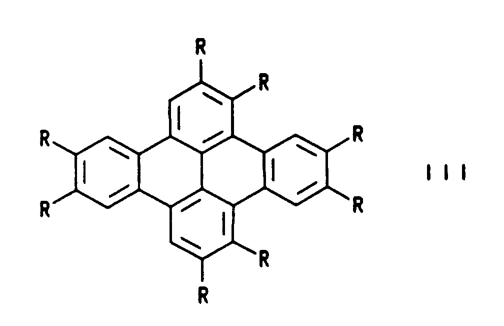 in denen R die folgende Bedeutung hat:
-OOC-*CHR¹X, 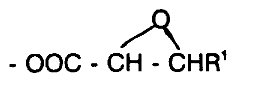 wobei
- R¹: ein Alkylrest mit 1 - 10 Kohlenstoffatomen und
- X: F, Cl, Br, OH, OR¹ oder ein Alkylrest mit 1 bis 6 Kohlenstoffatomen, der ungleich R¹ sein muß, ist.
Insbesondere bevorzugt ist

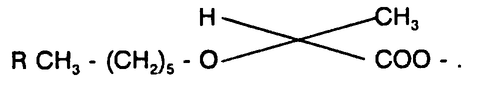

Die Substanzen werden hergestellt, indem die chirale Kette als Säurechlorid mit Hexahydroxydibenzopyrenchinon und -triphenylen basisch verestert wird. Das Chinon wird dabei durch Zinkzusatz zunächst zur Octahydroxyverbindung reduziert.

Die chirale Kette wird durch Alkylierung von Ethyllactat mit Hexyliodid/Silberoxid erzeugt, basisch verseift und mit Thionylchlorid zum Säurechlorid umgesetzt. Das Hexahydroxydibenzopyrenchinon wird auf diesem Weg hergestellt:
1. Veratrol wird mit Jod und Quecksilberoxid iodiert;
2. Erhitzen mit Kupferpulver liefert 3,3',4,4'-Tetramethoxybiphenyl;
3. Das Biphenyl wird mit p-Chloranil in Schwefelsäure oxidativ dimerisiert;
4. Hexamethoxydibenzopyrenchinon wird mit Bortribromid demethyliert.

Direkte p-Chloranil/Schwefelsäure-Oxidation von Veratrol und anschließende Demethylierung mit Bortribromid liefert das Hexahydroxytriphenylen.

In den folgenden Beispielen soll die Erfindung weitergehend erläutert werden.

### Beispiel 1:

Synthese von 1,2,5,6,8,9,12,13-Octa-(S-2-Methyl-3-oxanonanoyloxy)-dibenzo(e,l)pyren D_{M9} (= 1,2,5,6,8,9,12,13-Octa-(S-2-O-Hexyllactoyloxy)-dibenzo(fg,op)naphthacen) und 2,3,6,7,10,11-Hexa-(S-2-Methyl-3-oxanonanoyloxy)-triphenylen T_{M9} 2,5,6,9,12,13-Hexamethoxydibenzo(e,l)pyren-1,8-chinon wurde nach O.C. Musgrave & C.J. Webster, J. Chem. Soc. (C), 1971, 1393 aus 3,3',4,4'-Tetramethoxybiphenyl hergestellt. Das Biphenyl wurde nach der CA-Kurzfassung von E. Ritchie, J. Proc. Roy. Soc. New South Wales, 1944, 78, 134 aus Veratrol via 4-Jodveratrol synthetisiert.

2,3,6,7,10,11-Hexamethoxytriphenylen wurde aus Veratrol nach O.C. Musgrave & C.J. Webster, J. Chem. Soc. (C), 1972, 1397 gewonnen.

2,5,6,9,12,13-Hexahydroxydibenzo(e,l)pyren-1,8-chinon und 2,3,6,7,10,11-Hexahydroxytriphenylen wurden jeweils aus der Hexamethoxyverbindung durch dreistündiges Rückflußkochen von 1,5 g mit 5 ml Bortribromid in 50 ml Benzol unter trockenem Stickstoff erzeugt. 1,1 g Rohprodukt wurden durch Gießen der Reaktionslösung in 200 ml Wasser und Abnutschen isoliert, vakuumgetrocknet und ohne weitere Reinigung verestert.

S-2-O-Hexylmilchsäureethylester entstand durch 24 stündiges Rühren bei 100°C von 34,5 g S-Milchsäureethylester mit 63,6 g 1-Jodhexan und 23,2 g Silber(I)-oxid unter Feuchtigkeitsausschluß. Es wurde filtriert und im Wasserstrahlvakuum destilliert. Man erhielt 20,6 g bei 104°C im Wasserstrahlvakuum siedendes Produkt. ¹H-NMR (90 MHz, CDCl₃/TMS): δ (ppm) = 0,82 (3H,t,6Hz), 1,1 -1,7 (14H,m), 3,15 - 3,65 (2H,m), 3,87 (1H,1,7Hz), 4,15 (2H,q,7Hz).

S-2-O-Hexylmilchsäure wurde aus 8 g Ethylester durch dreitägiges Rühren mit 3 g Kaliumhydroxid in 100 ml Methanol, Abdampfen des Alkohols, Aufnahme in 100 ml Wasser und Ansäuern mit 31 %-iger Salzsäure erzeugt. Es wurde dreimal mit je 100 ml Essigsäureethylester ausgeschüttelt, die vereinigten Esterphasen mit Natriumsulfat getrocknet und eingedampft. Man erhielt 6 g Rohsäure.

S-2-O-Hexylmilchsäurechlorid bildete sich aus 6 g Rohsäure bei zweitägigem Rühren mit 30 ml Thionylchlorid und drei Tropfen Dimethylformamid. Das überschüssige Thionylchlorid wurde bei 50°C zwei Stunden lang im Wasserstrahlvakuum abgezogen.

### D_{M9} (Verbindung der Formel I):

Zum nach Entfernen des Thionylchlorids zurückbleibenden Säurechlorid aus 6 g Rohsäure wurden 30 ml Benzol, 0,6 g des Hexahydroxychinons, 5 g Pyridin, eine Spatelspitze 4-(Dimethylamino)-pyridin und 1 g Zinkstaub gegeben. Nach dreitägigem Rühren unter Feuchtigkeitsauschluß wurde das Lösemittel am Rotationsverdampfer entfernt und der in Dichlormethan lösliche Teil des Rückstands auf eine kurze Kieselgelsäule gegeben. Das Produkt wurde mit Dichlormethan eluiert und durch Mitteldrucksäulenchromatographie in Hexan : Essigsäureethylester 4 : 1 gereinigt. Man erhielt 0,6 g D_{M9}. ¹H-NMR (90 MHz, CDCl₃/TMS): δ (ppm) = 0,65 - 0,95 (24H,m), 1,05 - 1,8 (88H,m), 3,2 - 3,9 (16H,m), 3,95 - 4,5 (8H,m), 8,40 (2H,s), 8,55 (2H,s), 9,02 (2H,s).

### T_{M9} (Verbindung der Formel II):

Zum nach Entfernen des Thionylchlorids zurückbleibenden Säurechlorid aus 6 g Rohsäure wurden 40 ml Aceton, 0,8 g des Hexahydroxytriphenylens, 5 g Pyridin und eine Spatelspitze 4-(Dimethylamino)-pyridin gegeben. Nach eintägigem Rühren unter Feuchtigkeitsauschluß wurde das Lösemittel am Rotationsverdampfer entfernt und der in Dichlormethan lösliche Teil des Rückstands auf eine kurze Kieselgelsäule gegeben. Das Produkt wurde mit Dichlormethan eluiert und durch Mitteldrucksäulenchromatographie in Hexan : Essigsäureethylester 4 : 1 gereinigt. Man erhielt 1,3 g T_{M9}.

¹H-NMR (90 MHz, CDCl₃/TMS): δ (ppm) = 0,92 (18H,t,6Hz), 1,1 - 1,9 (66H,m), 3,3 - 4,0 (12H,m), 4,22 (6H,q,7Hz), 7,90 (6H,s).

### Beispiel 2:

### Einsatz von D_{M9} in einer Flüssigkristallzelle (Anwendungsbeispiel).

Durch Hin- und Herscheren des kolumnaren Flüssigkristalls zwischen den leitenden Begrenzungsflächen wurde erreicht, daß die Längsachsen der Säulen in einer Richtung lagen und der Flüssigkristall überall in gleicher Weise schaltete. Typische Parameter für bistabiles Schalten bei 90°C waren 10 µm Probendicke und ± (30 - 40) V mit einem Schaltwinkel der gekreuzten Hauptachsen von ± (20 - 25)°. Eine solche Schaltzelle kann beispielsweise dazu verwendet werden, zwischen Hell und Dunkel bistabil hin- und herzuschalten. Zu diesem Zweck muß sie so zwischen gekreuzte Polisatoren gelegt werden, daß in einem der Schaltzustände ihre optischen Hauptachsen mit den Polarisatorenachsen zusammenfallen.

## Patentansprüche

1. Elektrooptisch schaltbares kolumnar-flüssigkristallines System, dadurch gekennzeichnet, daß die Kolumnen eine ferroelektrische Querpolarisation besitzen.

2. Elektrooptisch schaltbares kolumnar-flüssigkristallines System nach Anspruch 1, enthaltend achirale Moleküle, die eine geneigte kolumnare Phase ausbilden, und chirale Dotierstoffe.

3. Elektrooptisch schaltbares kolumnar-flüssigkristallines System nach Anspruch 1 und/oder 2, dadurch gekennzeichnet, daß es eine oder mehrere Verbindungen aus der Gruppe mehrfach lateral substituierte Aromaten, mehrfach substituierte Monosaccharide, mehrfach substituierte Oligosaccharide, bekettete Bis-1,3-dionato-Kupfer (II)-Komplexe, Arylimin-Palladium-Komplexe, N-benzoglierte Azamakrozyklen, benzoylierte Cyclohexantriole, benzoylierte Catechine und Quercitole enthält.

4. Elektrooptisch schaltbares flüssigkristallines System nach einem oder mehreren der Ansprüche 1 bis 3, dadurch gekennzeichnet, daß es Substanzen der Formel (I) und/oder (II) und/oder (III) enthält, 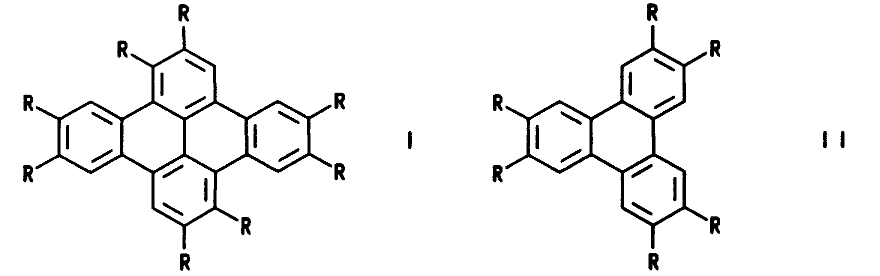 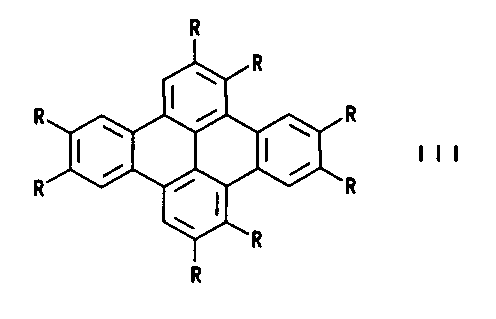 in denen R die folgenden Bedeutungen hat: - OOC - *CHR¹X, 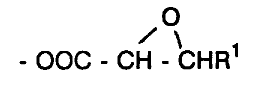 wobei
R¹ ein Alkylrest mit 1 - 10 Kohlenstoffatomen ist und
X F, Cl, Br, OH, OR¹ oder einen Alkylrest mit 1 bis 6 Kohlenstoffatomen, der ungleich R¹ sein muß, bedeutet.

5. Elektrooptisches Schalt- und Anzeigeelement, enthaltend ein flüssigkristallines System nach einem oder mehreren der Ansprüche 1 bis 4.

6. Elektrooptisches Schalt- und Anzeigeelement nach Anspruch 5, dadurch gekennzeichnet, daß der kolumnare Flüssigkristall so orientiert ist, daß der schaltbare Anteil des Querdipolmoments eine Komponente in Richtung des angelegten Feldes hat.

7. Elektrooptisches Schalt- und Anzeigeelement nach Anspruch 5 und/oder 6, dadurch gekennzeichnet, daß die Längsachsen der Kolumnen einen Winkel von 45 bis 90° mit der Zellnormalen bilden.

8. Elektrooptisches Schalt- und Anzeigeelement einem oder mehreren der Ansprüche 5 bis 7, dadurch gekennzeichnet, daß die Kolumnen in einer einheitlichen Richtung parallel zu den leitenden Begrenzungsflächen liegen und der Flüssigkristall eine bistabile Querpolarisation besitzt, welche parallel zur Zellnormalen ist.

9. Elektrooptisches Schalt- und Anzeigeelement nach einem oder mehreren der Ansprüche 5 bis 8, dadurch gekennzeichnet, daß die bistabile Querpolarisation, welche parallel zur Zellnormalen ist, durch Anlegen einer elektrischen Spannung erzeugt wird.

## Claims

1. An electro-optically switchable columnar liquid-crystalline system, wherein the columns have ferroelectric transverse polarization.

2. An electro-optically switchable columnar liquid-crystalline system as claimed in claim 1, containing achiral molecules which form a tilted columnar phase, and chiral dopes.

3. An electro-optically switchable columnar liquid-crystalline system as claimed in claim 1 and/or 2, which contains one or more compounds from the group consisting of laterally polysubstituted aromatic compounds, polysubstituted monosaccharides, polysubstituted oligosaccharides, chained bis-1,3-dionatocopper(II) complexes, arylimine/palladium complexes N-benzoylated azamacrocycles, benzoylated cyclohexanetriols, benzoylated catechols and quercitols.

4. An electro-optically switchable liquid-crystalline system as claimed in one or more of claims 1 to 3, which contains substances of the formula (I) and/or (II) and/or (III) 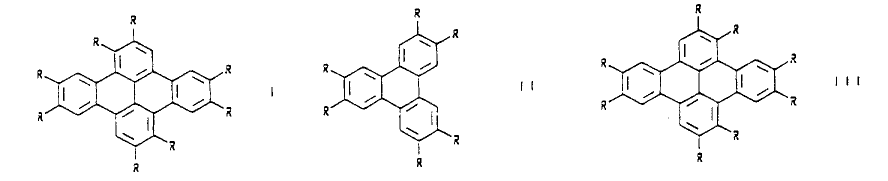 in which R has the following meanings:
-OOC-*CHR¹X, 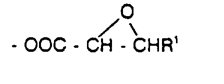 where
R¹ is an alkyl radical having 1-10 carbon atoms, and
X is F, Cl, Br, OH, OR¹ or an alkyl radical having 1 to 6 carbon atoms which must be different from R¹.

5. An electro-optical switching and display element which contains a liquid-crystalline system as claimed in one or more of claims 1 to 4.

6. An electro-optical switching and display element as claimed in claim 5, wherein the columnar liquid crystal is aligned so that the switchable part of the transverse dipole moment has a component in the direction of the applied field.

7. An electro-optical switching and display element as claimed in claim 5 and/or 6, wherein the longitudinal axes of the columns form an angle of from 45 to 90° with the cell perpendicular.

8. An electro-optical switching and display element as claimed in one or more of claims 5 to 7, wherein the columns are in a uniform direction parallel to the conductive limiting surfaces, and the liquid crystal has a bistable transverse polarization which is parallel to the cell perpendicular.

9. An electro-optical switching and display element as claimed in one or more of claims 5 to 8, wherein the bistable transverse polarization, which is parallel to the cell perpendicular, is produced by applying an electrical voltage.

## Revendications

1. Système de commutation électrooptique à cristaux liquides en colonne, caractérisé en ce que les colonnes ont une polarisation ferroélectrique transversale.

2. Système de commutation électrooptique à cristaux liquides en colonne selon la revendication 1, contenant des molécules achirales, qui forment une phase inclinée en colonne, et des substances de dopage chirales.

3. Système de commutation électrooptique à cristaux liquides en colonne selon la revendication 1 et/ou 2, caractérisé en ce qu'un ou plusieurs composés pris dans le groupe de composés aromatiques à substitution latérale multiple, de monosaccharides plusieurs fois substitués, d'oligosaccharides plusieurs fois substitués, de complexes chaînés à bis-1,3-dionato-cuivre(II), de complexes à l'arylimine-palladium, de macrocycles aza N-benzoylés, de cyclohexanetriols benzoylés, de catéchines benzoylés et de quercitols.

4. Système de commutation électrooptique à cristaux liquides en colonne selon une ou plusieurs des revendications 1 à 3, caractérisé en ce qu'il contient des substances de formule (I) et/ou (II) et/ou (III) 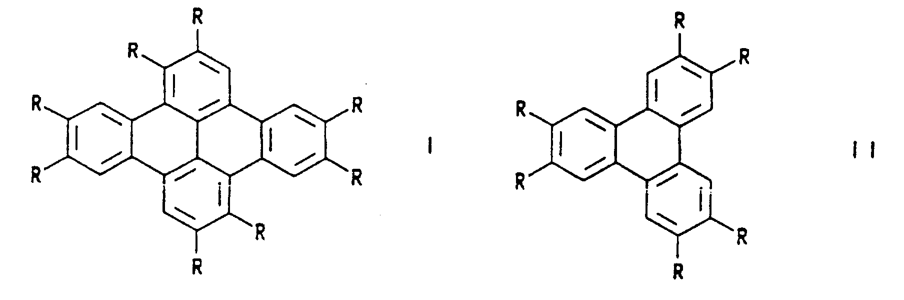 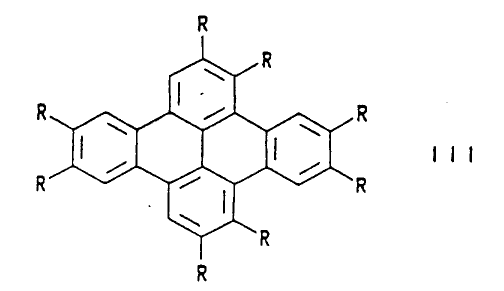 dans lesquelles R a les significations suivantes
-OOC-*CHR¹X, 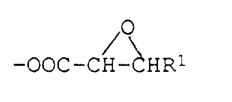 où
R¹ représente un radical alkyle avec 1 à 10 atomes de carbone et
X représente F, Cl, Br, OH, OR¹ ou un radical alkyle avec 1 à 6 atomes de carbone qui ne doit pas être égal à R¹.

5. Elément de commutation et d'affichage électrooptique contenant un système à cristaux liquides selon une ou plusieurs des revendications 1 à 4.

6. Elément de commutation et d'affichage électrooptique selon la revendication 5, caractérisé en ce que le cristal liquides en colonne est orienté de façon telle que le taux commutable du moment du dipôle transversal ait une composante dans le sens du champ appliqué.

7. Elément de commutation et d'affichage électrooptique selon la revendication 5 et/ou 6, caractérisé en ce que les axes longitudinales des colonnes forment un angle de 45 à 90° par rapport à la normale de la cellule.

8. Elément de commutation et d'affichage selon une ou plusieurs des revendications 5 à 7, caractérisé en ce que les colonnes sont disposées dans une direction uniforme, parallèle aux plans de contact directeurs et le cristal liquide a une polarisation transversale bistable qui est parallèle à la normale de la cellule.

9. Elément de commutation et d'affichage ou plusieurs des revendication 5 à 8, caractérisé en ce que la polarisation transversale bistable, qui est parallèle à la normale de la cellule, est provoquée par application d'une voltage électrique.
